# EUROPÄISCHE PATENTANMELDUNG

(11) **EP 1 316 355 A2**
(43) Veröffentlichungstag der Anmeldung: **04.06.2003**
(21) Anmeldenummer: 02026168.1
(22) Anmeldetag: 25.11.2002
(51) Int. Cl.: B01D 67/00, B01D 71/78, B01D 69/08, B01D 65/08, C08J 7/16

(54) **Modifizierte Hohlfasermembranmaterialien und Verfahren zu ihrer Modifizierung**

(30) Priorität: 29.11.2001 DE 10159191
(71) Anmelder: Institut für Polymerforschung Dresden e.V., 01069 Dresden (DE)
(72) Erfinder: Meier-Haack, Jochen, Dr., 01259 Dresden (DE); Caroll, Tim, Dr., Palmerston North (NZ)
(74) Vertreter: Rauschenbach, Marion

(57) **Zusammenfassung**

Die Erfindung bezieht sich auf das Gebiet der Chemie und betrifft modifizierte Hohlfasermembranmaterialien, die beispielsweise in der Trink- und Brauchwasseraufbereitung eingesetzt werden können.

Aufgabe der vorliegenden Erfindung ist es, modifizierte Hohlfasermembranmaterialien und ein Modifizierungsverfahren anzugeben, mit dem bei mindestens gleicher Verringerung des Membranfoulings der Permatfluss in einem wesentlich geringeren Maße vermindert wird als im Vergleich zu den bisher beschriebenen Verfahren.

Gelöst wird die Aufgabe durch modifizierte Hohlfasermembranmaterialien, aus porösen oder dichten Membranmaterialien, bei denen die Modifizierung als pfropfpolymerisierte Schicht auf mindestens der der Feedlösung zugewandten Oberfläche einer Hohlfasermembran ausgebildet ist und die Dicke der Schicht entlang der Hohlfaserlänge ungleich ist.

Die Aufgabe wird weiterhin gelöst durch ein Verfahren zur Modifizierung von Hohlfasermembranmaterialien, bei dem mindestens ein Monomer mit mindestens einer radikalisch polymerisierbaren Doppelbindung im Molekül, mit einem preadsorbierten Makroinitiator auf ein Hohlfasermembranmaterial aufgebracht und anschließend eine thermisch und/oder strahleninduzierte Pfropfpolymerisation durchgeführt wird.

## Beschreibung

Die Erfindung bezieht sich auf die Gebiete der Chemie und der Aufbereitungstechnik und betrifft modifizierte Hohlfasermembranmaterialien, die beispielsweise zur Aufarbeitung wässriger Systeme wie z. B. in der Trink- und Brauchwasseraufbereitung, der Abwasserbehandlung oder der Lebensmittelindustrie eingesetzt werden können und ein Verfahren zu ihrer Modifizierung.

Trotz aller Fortschritte in der Entwicklung neuer Membranmaterialien und membrangestützten Filtrationstechniken, stellt das sogenannte Membranfouling ein bisher noch nicht befriedigend gelöstes Problem dar. Unter Membranfouling werden alle Phänomene zusammengefasst, die zu einem Absinken der Leistungsfähigkeit, im Allgemeinen des Permeatflusses, mit steigender Betriebszeit führen. Das Membranfouling wird in der Regel durch unerwünschte Ablagerung von Feedbestandteilen auf der Membran verursacht, die im Falle von organischen Materialien insbesondere durch hydrophobe Wechselwirkungen (van der Waals) zwischen dem Membranmaterial und den Feedbestandteilen unterstützt wird. Die Foulingproblematik tritt insbesondere bei der Aufarbeitung wässriger Systeme auf, die mit organischen aber auch anorganischen Materialien belastet sind, wie sie beispielsweise bei der Reinigung kommunaler oder industrieller Abwässer, der Trinkund Brauchwasseraufbereitung sowie bei der Aufarbeitung von Fermentationsbrühen anfallen (A. L. Zydney in "Microfiltration and Ultrafiltration, Principles and Technical Applications", Hrsg. L. J. Zeman, A. L. Zydney, Marcel Dekker, New York (1996), 397 - 464; K. J. Kim, A. G. Fane, J. Membr. Sci., **99**, 149 - 162 (1995)).

Um das Fouling so weit wie möglich zurückzudrängen, werden vielfältige, in der Regel verfahrenstechnische, Methoden angewandt. Hier sind in erster Linie Maßnahmen zu nennen, mit denen versucht über ein spezielles Moduldesign eine turbulente Strömung oberhalb der Membranoberfläche zu erzeugen, mit deren Hilfe die Ablagerung von Feedbestandteilen vermindert werden soll (G. Belfort, M. Brewster, K.-Y. Chung, US Pat. 5,204,002 (1993); G. Belfort, US Pat. 5,626,758 (1997))

Weiterhin werden verschiedene Spül- und Reinigungstechniken wie z. B. die Rückspülung mit Gasen oder Wasser eingesetzt, um den adsorbierten Film von der Membranoberfläche abzulösen. Außerdem müssen in regelmäßigen Abständen Reinigungszyklen mit z. T. aggressiven Chemikalien durchgeführt werden, um die Leistungsfähigkeit der Membrananlage zu gewährleisten. Insbesondere die Rückspülung und die Reinigung mit Chemikalien führen zu einer erheblichen Kostensteigerung und somit zu einer Verschlechterung der Konkurrenzfähigkeit der Membranverfahren (H. C. Flemming, G. Schaule, T. Griebe, J. Schmitt, A. Tachkiarowa, Desalination, **113,** 215 - 225 (1997)).

In letzter Zeit wurden zunehmend Arbeiten zur chemischen Oberflächenmodifizierung und Oberflächenfunktionalisierung von Membranen publiziert.
Es wurde die Modifizierung (Hydrophilierung) von Polysulfon-Hohlfasermembranen mit nicht-ionischen Tensiden (Triton X-100, Pluronic F108) beschrieben (A. Maartens, P. Swart, E. P. Jacobs, Journal of Colloid and Interface Science, 221, 137 - 142 (2000)). Die geänderten Wechselwirkungen zwischen dem Membranmaterial und dem Feed (Hydrophilierung) führten bei der Triton X-100 Beschichtung zu einer Erhöhung des Permeatflusses bei gleichzeitiger Verringerung des Rückhaltevermögens im Vergleich zur unbehandelten Membran. Die Flussabnahme über der Filtrationszeit (Foulingverhalten) dieser Membran war jedoch mit der der unbehandelten Membran vergleichbar. Die Pluronic F108 modifizierte Membran zeigte ein verbessertes Rückhaltevermögen bei deutlich niedrigerem Permeatfluss als die unbehandelte Membran. Bedingt durch die rein physikalischen Wechselwirkungen zwischen dem Membranmaterial und den Modifizierungsagenzien ist die Beschichtung reversibel und die Tenside (insbesondere Pluronic F108) werden mit zunehmender Betriebszeit ausgewaschen, so dass der positive Effekt der Modifizierung verloren geht.
Um eine unter Filtrationsbedingungen stabile Modifizierung zu erreichen, ist es notwendig die Modifikatorsubstanz chemisch auf der Membranoberfläche zu fixieren. Dies kann z. B. durch Pfropfpolymerisation entsprechender Monomere auf die Membranoberfläche erreicht werden. Die Initiierung der Pfropfreaktion kann sowohl chemisch, durch Plasmabehandlung oder strahlenchemisch erfolgen.
Die Modifizierung von Polypropylenmikrofiltrationsmembranen durch Plasmabehandlung und nachfolgender Pfropfung von Acrylsäure wurde beschrieben (J. Meier-Haack, T. Rieser, W. Lenk, D. Lehmann, S. Berwald, S. Schwarz, Chem. Eng. Technol., 23, 114 - 118 (2000)). Die Modifizierung führte zu einer deutlichen Verringerung des Permeatflusses bei gleichzeitiger Verbesserung des Rückhaltesvermögens für Human-Serum-Albumin. Durch die Beschichtung konnte das irreversible Fouling der Membran verringert werden. Die Nachteile dieser Modifizierungsmethode sind:
a) die geringe zeitliche Stabilität der durch die Plasmabehandlung erzeugten Radikalinitiatorgruppen
b) der durch die Plasmabehandlung bedingte Abbau des Membranmaterials Auch die direkte Pfropfung von hydrophilen Monomeren auf Polyethersulfon und Polysulfonmembranen durch UV-Bestrahlung wurde beschrieben (US 5,468,390 (1995); J. E.Kilduff, S. Mattaraj, J. P. Pieracci, G: Belfort, Proc. Conf. Membranes in Drinking Water and Industrial Water Production, 2, 239 - 248 (2000)). Die Bestrahlung der Membranmaterialien mit UV-Licht erzeugt einerseits aktive Zentren zur Pfropfung der Monomere, andererseits wird das Membranmaterial photochemisch abgebaut, was zu einer geringeren mechanischen Stabilität des Membranmaterials und zu einem Absinken des Rückhaltevermögens bei gleichzeitig erhöhtem Permeatfluss führt.
Die UV-initiierte Pfropfung von hydrophilen Monomeren auf Membranen unter zu Hilfenahme von Photoinitiatoren wurde ebenfalls beschrieben (T. Peng, Y.-L. Cheng, J. Appl. Polym. Sci., 76, 778 - 786 (2000); M. Ulbricht, G. Belfort, J. Membr. Sci., 111, 193 - 215 (1997)). Es werden in der Regel Photoinitiatoren mit niedrigem Molekulargewicht wie z. B. Benzophenon, Acetophenonderivate oder Xanthon eingesetzt. Die Membranen werden vor der Pfropfreaktion mit dem Photoinitiator im Tauchverfahren beschichtet. Diese Methode erlaubt die Pfropfung unter milderen Bedingungen als zuvor beschrieben, eine Beschädigung des Substrates durch die UV-Bestrahlung kann jedoch nicht ausgeschlossen werden. Je nach benötigtem Reaktionsmedium kann jedoch der Photoinitiator von der Membranoberfläche gelöst werden, wodurch die Pfropfausbeute nachteilig beeinflusst wird.
Eine Methode zur Hydrophilierung und bioaktiven Beschichtung von Oberflächen unter Verwendung von Makroinitiatoren wurde beschrieben (DE 19727554, DE 19727555). Das Substrat wird zunächst mit einem sogenannten Makroinitiator, bei dem sich die thermisch instabile Radikale bildende Gruppen in der Seitenkette befinden, beschichtet. Die Pfropfung erfolgt vorzugsweise in einer wässrigen Monomerlösung bei erhöhter Temperatur (90°C). Es werden durchgehend gleichmäßige hydrophile Schichten mit guten antibakteriellen Eigenschaften und niedrigen Reibgleiteigenschaften erhalten.

Der Einfluss der Fasergeometrie auf das Foulingverhalten von Hohlfasermembranen wurde beschrieben (T. Carroll, u.a. J. Membr. Sci., 168, 203-212 (2000); T. Carroll, J. Membr. Sci. 189, 167-189 (2001)). Es wurde gezeigt, dass der Permeatfluss durch die Membran ungleichmäßig über die Faserlänge verteilt ist. Bedingt durch das ungleichmäßige axiale Permeatflussprofil kommt es zu einer ungleichmäßigen axialen Ablagerung von Feedbestandteilen auf der Membranoberfläche. Die anfängliche Foulingrate ist an den Punkten höchster Flussrate, den offenen Enden der Hohlfasermembran, am höchsten.

Die angeführten Methoden zur Modifizierung von Membranoberflächen zur Verringerung der Foulingneigung haben alle den Nachteil, dass eine gleichmäßige Beschichtung auf der Oberfläche der Membran erfolgt. Diese gleichmäßige Beschichtung ist insbesondere für Hohlfasermembranen von Nachteil, da in diesem Fall auch die Bereiche der Membran, die nur einen geringen Beitrag zum Gesamtpermeatfluss leisten, mit der gleichen Pfropfmenge modifiziert sind und im ungünstigsten Fall nicht mehr zum Permeatfluss beitragen. Weiterhin wird bei einigen Methoden, insbesondere den durch Strahlung oder Plasmabehandlung initiierten Pfropfmodifizierungen zusätzlich das Material durch Abbaureaktionen geschädigt, was unter Umständen eine Verschlechterung der mechanischen Eigenschaften zur Folge haben kann.

Aufgabe der vorliegenden Erfindung ist es, modifizierte Hohlfasermembranmaterialien und ein Modifizierungsverfahren anzugeben, mit dem bei mindestens gleicher Verringerung des Membranfoulings der Permatfluss in einem wesentlich geringeren Maße vermindert wird als im Vergleich zu den bisher beschriebenen Verfahren und die chemische Struktur des Membranmaterials nicht geschädigt wird.

Gelöst wird die Aufgabe durch die in den Ansprüchen angegebene Erfindung. Weiterbildungen sind Gegenstand der Unteransprüche.

Erfindungsgemäß bestehen die modifizierten Hohlfasermembranmaterialien aus porösen oder dichten Membranmaterialien, bei denen die Modifizierung als pfropfpolymerisierte Schicht auf mindestens die der Feedlösung zugewandten Oberfläche einer Hohlfasermembran ausgebildet ist und die Dicke der Schicht entlang der Hohlfaserlänge ungleich ist. Die Modifizierung kann vorteilhafterweise auch die innere Oberfläche der Hohlfasermembran umfassen, wobei als innere Oberfläche die Fläche der Porenwände definiert ist.
Dabei weist vorteilhafterweise die Dicke der Schicht entlang der Hohlfaserlänge einem Gradienten aufweist.
Ebenfalls vorteilhafterweise ist die Dicke der Schicht entlang der Hohlfaserlänge zur Hohlfaserlängsmitte zu dünner ausgebildet als an den offenen Enden der Hohlfaser.
Es ist auch vorteilhaft, wenn die Dicke der Schicht dem Permeatflußprofil angepasst ist.

Das erfindungsgemäße Hohlfasermembranmaterial besteht aus einer porösen oder dichten Hohlfasermembran deren Oberfläche, die der Feedlösung zugewandt ist, unter Verwendung eines pre-adsorbierten Makroinitiators mit mindestens einem, vorzugsweise hydrophilen Monomeren, das mindesten eine olefinische Doppelbindung aufweist, durch Pfropfpolymerisation modifiziert wurde, wobei der Pfropfungsgrad nicht-linear entlang der Faserlänge und vorteilhafterweise dem Permeatflussprofil angepasst ist. Insbesondere bei porösen Membranen kann auch die innere Oberfläche modifiziert werden. Als innere Oberfläche ist die Fläche der Porenwände definiert. Die Hohlfaser kann dabei als Einzelfaser oder als Faserbündel oder in einem vorgefertigten Modul vorliegen. Der Pfropfungsgrad ist dabei vorteilhafterweise an den offenen Enden der Membran am höchsten und in der Mitte am niedrigsten ist. Das jeweilige optimale Pfropfprofil kann über Berechnungen des Permeatflussprofils über die Faserlänge ermittelt werden.
Die Hohlfasern können dabei aus Polymeren wie Polyolefinen wie z. B. Polypropylen, Polyethylen, per- oder teilfluorierten Polyolefinen, wie PTFE oder PVDF, Polyacrylnitril, Polysulfonen, Polyethersulfonen, Polycarbonaten, Polyethern, Polyetherketonen, Polyetheretherketonen, Polyimiden, Polyestern (z. B. PET), Polyamiden, Polyetheramiden, Polyesteramiden, Polyurethanen, Cellulose oder Cellulosederivaten oder keramischen Materialien oder Metalloxiden oder Silikaten (Zeolithe) oder Silikat-Polymer-Compositmaterialien hergestellt worden sein.
Als Makroinitiatoren werden vorzugsweise Copolymere des Maleinsäureanhydrids mit α-Olefinen eingesetzt, die Radikale bildende und/oder als Photoinitiator wirksame Gruppen enthalten, die durch Umsetzung der Copolymeren mit z. B. Alkylhydroperoxiden z. B. tert.-Butylhydroperoxid, aromatischen Ketonen z. B. 4-Aminobenzophenon oder Hydroxybenzophenon oder Azoverbindungen, wie beispielsweise 4-((1,1-dicyanoethyl)azo)benzylalkohol erhalten werden. Die Radikale bildenden und/oder als Photoinitiator wirksamen Gruppen der Makroinitiatoren sind vorteilhafterweise in den Seitenketten angeordnet.
Zum vorteilhaften Vorbehandeln (Primen) der Hohlfasermembranen mit dem Makroinitiator wird dieser in einem organischen Lösungsmittel oder Lösungsmittelgemisch gelöst und im Tauch-, Sprüh-, Spül- oder Filtrationsverfahren mindestens auf die der Feedlösung zugewandten Oberfläche der Hohlfasermembran appliziert. Als innere Oberfläche ist die Oberfläche der Porenwände definiert. Vorteilhafterweise kann der Makroinitiator auch auf der inneren Oberfläche aufgebracht sein. Ein günstiges Lösungsmittel oder Lösungsmittelgemisch, das sich durch orientierende Versuche leicht ermitteln lässt, sollte einen möglichst hohen Dampfdruck aufweisen, um ein schnelles Trocknen der Substrate zu gewährleisten und die das Membranmaterial vorteilhafterweise anquellen, aber nicht nachhaltig verändern (z. B. Zerstörung der Porenstruktur). Der Makroinitiator wird vorzugsweise aus 1 - 10 Gew.-%igen Lösungen aufgebracht. Geeignete Lösungsmittel sind zum Beispiel Alkohole (z. B. Methanol, Ethanol, Propanol, 2-Propanol), Ether (z. B. Diethylether, Tetrahydrofuran, Dioxan), Ester (z. B. Ethylacetat, Butylacetat), Ketone (z. B. Aceton, Methylethylketon), Kohlenwasserstoffe (z. B. Pentan, Hexan, Heptan, Cyclohexan, Toluol, Xylol), halogenierte Kohlenwasserstoffe (z. B. Dichlormethan, Chloroform, Tetrachlorkohlenstoff) oder stark polare nicht protische Lösungsmittel wie Dimethylacetamid oder N-Methylpyrrolidon.
Für die Modifizierung eingesetzte Monomere enthalten mindestens eine zur Polymerisation befähigte olefinische Doppelbindung und vorzugsweise mindestens eine hydrophile Gruppe im Molekül. Die polymerisierbare olefinische Doppelbindung kann beispielsweise als Vinyl- oder Allylrest oder in Resten, die sich von ungesättigten Carbonsäuren und deren Derivaten ableiten, wie Acrylsäure, Methacrylsäure oder Maleinsäure vorliegen.
Hydrophile Gruppen sind beispielsweise: Hydroxylgruppen, Alkyl-Ethergruppen, Acyloxygruppen, Carboxylgruppen und deren Salze, Carbonsäureamidgruppen, Sulfat-, Sulfonsäure-, Sulfinsäure-, Phosphat-, Phosphonsäure und Phosphinsäuregruppen und deren Salze, primäre, sekundäre und tertiäre Aminogruppen und deren Salze, Phosphoniumgruppen, Polyethylenoxid- oder Polypropylenoxidgruppen, mit oder ohne terminaler Hydroxylgruppe.
Aus diesen Aufzählungen ergeben sich eine Vielzahl von Monomeren, die allein oder dem jeweiligen Anwendungszweck angepasst im Gemisch zusammen mit anderen Monomeren eingesetzt werden können. Die Beschichtung besteht entsprechend den eingesetzten Monomeren aus einem Homo- oder Copolymer.
Als Monomere können eingesetzt werden:
Acrylsäure und deren Derivate wie Acrylamid, N,N-Dimethylacrylamid, 2-Hydroxyethylacrylat, Polyethylenglykolmonomethylethermonoacrylat, Methacrylsäure und deren Derivate wie 2-Hydroxyethylmethacrylat, N,N-Dimethyl-2-aminoethylmethacrylat, Vinylether (z. B. Vinylmethylether),
Styrolbenzolsulfonsäuren und ihre Salze, Vinylsulfonsäure und ihre Salze, Vinylsulfat und Alkalisalze, Vinylphosphonsäure und Alkalisalz, Vinylphosphat und Alkalisalz, Vinylpyridine, Vinylpyrrolidon, Vinylcarbazol, Allylamin, Vinylamin, Diallylamin, Diallylammoniumsalze, Hydroxystyrol, Aminostyrol.
Zusätzlich können noch vernetzende Monomere mit mindestens zwei olefinischen Doppelbindungen und ggf. einer der oben genannten hydrophilen Gruppen im Molekül eingesetzt werden, was zu einer erhöhten Stabilität der pfropfpolymerisierten Schicht führt. Die Konzentration dieser Monomere liegt im Bereich von 0.1 - 2 Ma.-% vorzugsweise im Bereich von 0.5 - 1.5 Ma.-% bezogen auf die Monomereinwaage. Als vernetzende Monomere eignen sich beispielsweise Diacrylamid, Polyethylenglykoldiacrylat, Polyethylendimethacrylat.

Die erfindungsgemäße Modifizierung wird folgendermaßen durchgeführt.
Bei dem Verfahren werden mindestens ein Monomer mit mindestens einer radikalisch polymerisierbaren Doppelbindung im Molekül, mit Hilfe eines pre-adsorbierten Makroinitiators, der Radikale bildende und/oder als Photoinitiator wirkende Gruppen, vorteilhafterweise in den Seitenketten des Polymergerüstes aufweist, die in der Lage sind, eine thermisch und/oder strahleninduzierte Pfropfpolymerisation zu initiieren, auf ein Hohlfasermembranmaterial aufgebracht und anschließend eine thermisch und/oder strahleninduzierte Pfropfpolymerisation durchgeführt, wobei über die Monomerkonzentration und die Reaktionszeit der Pfropfungsgrad und die Schichtdicke entlang der Hohlfaserlänge gesteuert werden.

Die vorteilhafterweise einsetzbaren Hohlfasermaterialien, Monomere, hydrophile Gruppen und Makroinitiatoren sind bereits weiter oben angeführt.

Die Modifizierung der Membranen erfolgt durch eine thermisch und/oder strahleninitiiert Pfropfpolymerisation unter Verwendung der erfindungsgemäßen Monomere. Die Hohlfasermembran wird zu diesem Zweck zunächst mit einem Makroinitiator beschichtet, der Radikale bildende Gruppen und/oder als Photoinitiator wirkende Gruppen, vorteilhafterweise in den Seitenketten des Polymergerüstes aufweist.
Danach wird die Pfropfpolymerisation thermisch und/oder strahleninitiiert ausgelöst und entsprechend dem jeweiligen Permeatflussprofil und der eingesetzten Monomerkonzentration solange fortgesetzt, bis die gewünschte Schichtdicke in dem gewünschten Profil entlang der Faserlänge realisiert ist.

Durch die angegebene erfindungsgemäße Modifizierung der Hohlfasermembranen wird eine pfropfpolymerisierte Schicht zur Verminderung des Membranfoulings auf die dem Feed zugewandte Oberfläche und vorteilhafterweise auch auf die innere Oberfläche der Hohlfasermembranmaterialien aufgebracht, ohne das zugrundeliegende Hohlfasermembranmaterial durch Bestrahlung oder Plasmabehandlung nachhaltig zu schädigen. Weiterhin von Vorteil ist, dass das Pfropfprofil dem Permeatfluss entlang der Faserlängsachse und damit dem Foulingprofil angepasst wird. Es wir bei einer optimalen Verringerung des Foulings der größtmögliche Permeatfluss und damit die größtmögliche Leistung der Membran erzielt.

Im weiteren wird die Erfindung an einem Ausführungsbeispiel näher erläutert.

### Beispiel

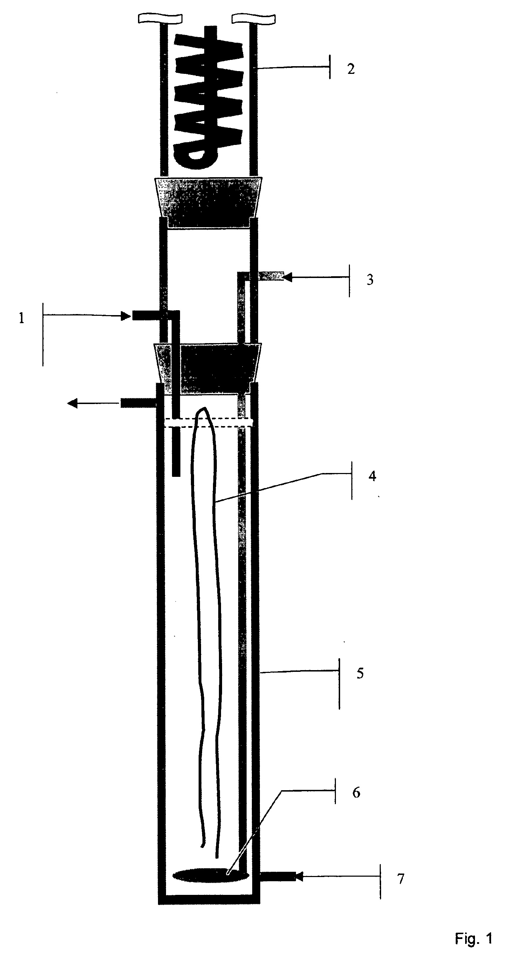

Als Makroinitiator wurde Poly(trimethyl-2-penten-alt-maleinsäureanhydrid) verwendet. Ein Teil der Anhydridgruppen sind mit tert.-Butylhydroperoxid verestert. Der Perestergehalt liegt bei ca. 10 mol-%.
Die Beschichtung mit dem Makroinitiator erfolgt durch Tauchen der Membranen für 30 sec in eine 3-%ige Lösung des Makroinitiators in Aceton.
Aus vorhergehenden Arbeiten ist bekannt, dass die Monomerkonzentration und die Reaktionszeit einen entscheidenden Einfluss auf die Ausbeute der thermisch initiierten Pfropfpolymerisation haben. Aus diesem Grund wurde die in Figur 1 schematisch dargestellte Apparatur eingesetzt, die es ermöglicht die Pfropfausbeute gleichzeitig über die Monomerkonzentration und die Reaktionszeit zu steuern. Das Gesamtvolumen des Reaktionsgefäßes beträgt ca. 200 ml.
Für eine Pfropfreaktion wird das Reaktionsgefäß mit 40 ml einer wässrigen Acrylsäurelösung (12 Ma.-%) gefüllt, so dass die ersten ca. 2 cm der Hohlfaser in diese Lösung eintauchen. Die Monomerlösung wird für ca. 30 min mit Inertgas (Stickstoff, Argon) gespült, um den gelösten Sauerstoff, der als Inhibitor wirkt zu verdrängen. Anschließend wird der Heizmantel des Reaktionsgefäßes an einen Umwälzthermostaten angeschlossen, mit dem das Heizmedium, in der Regel Wasser, auf 90 °C bereits vorgeheizt wurde. Das Heizmedium zirkuliert während der gesamten Reaktionszeit durch den Heizmantel des Reaktionsgefäßes. Nach 15 min Reaktionszeit wird damit begonnen sauerstofffreies und auf 90°C vorgewärmtes Wasser über den Lösungsmittelzulauf so schnell in das Reaktionsgefäß zu geben, dass nach 1,5 h das Reaktionsgefäß gefüllt ist. Die Reaktion wird für weitere 30 min fortgesetzt.
Die Bestimmung des Pfropfgrades entlang der Faserachse erfolgte mittels ATR/FTIR-Spektroskopie. Ein quantitativer Vergleich mit IR-Spektren von homogen gepfropften Membranen belegt die nicht lineare Pfropfung. Die Pfropfausbeuten liegen zwischen 7 Ma.-% an den offenen Enden der Membran und 2,5 Ma.-% in der Fasermitte.

### Bezugszeichenliste

- 1: Lösungsmittelzulauf
- 2: Rückflusskühler
- 3: N₂.Zuleitung
- 4: Membran
- 5: Reaktionsgefäß mit Heizmantel
- 6: Gasverteiler
- 7: Heizmedium

## Patentansprüche

1. Modifizierte Hohlfasermembranmaterialien, aus porösen oder dichten Membranmaterialien, bei denen die Modifizierung als pfropfpolymerisierte Schicht auf mindestens der der Feedlösung zugewandten Oberfläche einer Hohlfasermembran ausgebildet ist und die Dicke der Schicht entlang der Hohlfaserlänge ungleich ist.

2. Modifizierte Hohlfasermembranmaterialien nach Anspruch 1, bei denen die Dicke der Schicht entlang der Hohlfaserlänge einem Gradienten aufweist.

3. Modifizierte Hohlfasermembranmaterialien nach Anspruch 1, bei denen die Dicke der Schicht entlang der Hohlfaserlänge zur Hohlfaserlängsmitte zu dünner ausgebildet ist als an den offenen Enden der Hohlfaser.

4. Modifizierte Hohlfasermembranmaterialien nach Anspruch 1, bei denen die Dicke der Schicht dem Permeatflußprofil angepasst ist.

5. Modifizierte Hohlfasermembranmaterialien nach Anspruch 1, bei denen die der Feedlösung zugewandten Oberfläche auch die innere Oberfläche des Hohlfasermembranmaterials umfasst.

6. Verfahren zur Modifizierung von Hohlfasermembranmaterialien, bei dem mindestens ein Monomer mit mindestens einer radikalisch polymerisierbaren Doppelbindung im Molekül, mit Hilfe eines pre-adsorbierten Makroinitiators, der Radikale bildende und/oder als Photoinitiator wirkende Gruppen aufweist, die in der Lage sind, eine thermisch und/oder strahleninduzierte Pfropfpolymerisation zu initiieren, auf ein Hohlfasermembranmaterial aufgebracht und anschließend eine thermisch und/oder strahleninduzierte Pfropfpolymerisation durchgeführt wird, wobei über die Monomerkonzentration und die Reaktionszeit der Pfropfungsgrad und die Schichtdicke entlang der Hohlfaserlänge gesteuert werden.

7. Verfahren nach Anspruch 6, bei dem als Makroinitiator eine Verbindung eingesetzt wird, die Radikale bildende und/oder als Photoinitiator wirkende Gruppen in den Seitenketten des Polymergerüstes aufweist.

8. Verfahren nach Anspruch 6, bei dem als Hohlfasermembranmaterialien aus Polypropylen, Polyethylen, Polyacrylnitril, PVDF, PTFE, Polysulfonen, Polyethersulfonen, Polycarbonaten, Polyethern, Polyetherketonen, Polyetheretherketonen, Polyimiden, Polyestern, Polyamiden, Polyetheramiden, Polyesteramiden, Polyurethanen, Cellulose oder Cellulosederivate oder keramischen Materialien oder Metalloxiden oder Silikaten oder Silikat-Polymer-Compositmaterialien eingesetzt werden.

9. Verfahren nach Anspruch 6, bei dem als Makroinitiatoren Copolymere des Maleinsäureanhydrids mit α-Olefinen eingesetzt werden, die in der Seitenkette Radikale bildende und/oder als Photoinitiator wirksame Gruppen enthalten.

10. Verfahren nach Anspruch 6, bei dem der Makroinitiator in einem organischen Lösungsmittel oder Lösungsmittelgemisch gelöst und im Tauch-, Sprüh-, Spül- oder Filtrationsverfahren auf die Hohlfasermembranmaterialien aufgebracht wird.

11. Verfahren nach Anspruch 6, bei dem der Makroinitiator aus 1 - 10 Gew.-%igen Lösungen aufgebracht wird.

12. Verfahren nach Anspruch 6, bei dem als Lösungsmittel Methanol, Ethanol, Propanol, 2-Propanol, Diethylether, Tetrahydrofuran, Dioxan, Ethylacetat, Butylacetat, Aceton, Methylethylketon, Pentan, Hexan, Heptan, Cyclohexan, Toluol, Xylol, Dichlormethan, Chloroform, Tetrachlorkohlenstoff, Dimethylacetamid oder N-Methylpyrrolidon oder Gemische dieser Lösungsmittel eingesetzt werden.

13. Verfahren nach Anspruch 6, bei dem Monomere eingesetzt werden, die mindestens eine zur Polymerisation befähigte olefinische Doppelbindung und mindestens eine hydrophile Gruppe im Molekül aufweisen.

14. Verfahren nach Anspruch 13, bei dem die polymerisierbare olefinische Doppelbindung als Vinyl- oder Allylrest oder in Resten, die sich von ungesättigten Carbonsäuren und deren Derivaten ableiten, wie Acrylsäure, Methacrylsäure oder Maleinsäure vorliegt.

15. Verfahren nach Anspruch 13, bei dem als hydrophile Gruppen Hydroxylgruppen, Alkyl-Ethergruppen, Acyloxygruppen, Carboxylgruppen und deren Salze, Carbonsäureamidgruppen, Sulfat-, Sulfonsäure-, Sulfinsäure-, Phosphat-, Phosphonsäure und Phosphinsäuregruppen und deren Salze, primäre, sekundäre und tertiäre Aminogruppen und deren Salze, Phosphoniumgruppen, Polyethylenoxidoder Polypropylenoxidgruppen, mit oder ohne terminaler Hydroxylgruppe eingesetzt werden.

16. Verfahren nach Anspruch 13, bei dem als Monomere Acrylsäure und deren Derivate wie Acrylamid, N,N-Dimethylacrylamid, 2-Hydroxyethylacrylat, Polyethylenglykolmonomethylethermonoacrylat, Methacrylsäure und deren Derivate wie 2-Hydroxyethylmethacrylat, N,N-Dimethyl-2-aminoethylmethacrylat, Vinylether, Vinylmethylether, Styrolbenzolsulfonsäuren und ihre Salze, Vinylsulfonsäure und ihre Salze, Vinylsulfat und Alkalisalze, Vinylphosphonsäure und Alkalisalz, Vinylphosphat und Alkalisalz, Vinylpyridine, Vinylpyrrolidon, Vinylcarbazol, Allylamin, Vinylamin, Diallylamin, Diallylammoniumsalze, Hydroxystyrol, Aminostyrol eingesetzt werden.

17. Verfahren nach Anspruch 13, bei dem ein Monomer oder ein Gemisch von Monomeren eingesetzt wird.

18. Verfahren nach Anspruch 6, bei dem vernetzende Monomere mit mehr als einer polymerisierbaren Doppelbindung im Moleküle eingesetzt werden.

19. Verfahren nach Anspruch 18, bei dem als vernetzende Monomere mit zwei polymerisierbaren Doppelbindungen und mindestens einer hydrophilen Gruppe im Molekül eingesetzt werden.

20. Verfahren nach Anspruch 18, bei als vernetzende Monomere Diacrylamid, Polyethylenglykoldiacrylat, Polyethylenglykoldimethacrylat eingesetzt werden.

21. Verfahren nach Anspruch 18, bei dem vernetzende Monomere in einer Konzentration von 0.1 - 2 Ma.-% vorzugsweise im Bereich von 0.5 - 1.5 Ma.-% bezogen auf die Monomereinwaage eingesetzt werden.

22. Verfahren nach Anspruch 6, bei dem die Pfropfpolymerisation thermisch initiiert und in Lösung realisiert wird.

23. Verfahren nach Anspruch 6, bei dem die Pfropfpolymerisation photochemisch initiiert und in Lösung oder in der Gasphase realisiert wird.

24. Verfahren nach Anspruch 6, bei dem die Modifizierung an einer oder mehreren einzelnen Hohlfasern oder einem Hohlfaserbündel oder einem fertigen Modul durchgeführt wird.

25. Verfahren nach Anspruch 6, bei dem eine Monomerkonzentration von 1 Gew.-% bis 50 Gew.-% und Reaktionszeiten von 30 min bis 360 min für die thermisch initiierte Pfropfreaktion und Reaktionszeiten von 0,5 min bis 5 min für die UV-initiierte Pfropfreaktion realisiert werden.
